# EUROPÄISCHE PATENTANMELDUNG

(11) **EP 2 136 096 A1**
(43) Veröffentlichungstag der Anmeldung: **23.12.2009**
(21) Anmeldenummer: 09007180.4
(22) Anmeldetag: 29.05.2009
(51) Int. Cl.: F16D 13/64, F16D 13/72

(54) **Kupplungslamelle, insbesondere für eine nasslaufende Lamellenkupplung oder eine Überbrückungskupplung einer hydrodynamischen Kopplungseinrichtung**

(30) Priorität: 20.06.2008 DE 102008002556
(71) Anmelder: ZF Friedrichshafen AG, 88038 Friedrichshafen (DE)
(72) Erfinder: Kneuer, Michael, 97532 Üchtelhausen (DE); Lotze, Rüdiger, 97421 Schweinfurt (DE); Schröder, Arthur, 97456 Dittelbrunn (DE); Sudau, Jörg, 97464 Niederwerrn (DE)

(57) **Zusammenfassung**

Die Erfindung betrifft eine Kupplungslamelle, insbesondere für eine nasslaufende Lamellenkupplung oder eine Überbrückungskupplung einer hydrodynamischen Kopplungseinrichtung, umfassend einen Lamellenträger (2) mit einem auf wenigstens einer Seite darauf angeordneten Reibbelag, der mehrere Segmente (4) mit dazwischen angeordneten Durchlässen (6) für ein Arbeitsfluid umfassen kann. Um eine Beschädigung des Reibbelags durch eine Anströmung mit dem Arbeitsfluid zu verhindern, insbesondere wenn zur besseren Kühlung ein vergrößerter Volumenstrom vorgesehen ist, können Ecken (8) der Segmente (4) abgeschrägt oder verrundet ausgebildet werden und/oder es kann der Reibbelag so ausgestaltet werden, dass er in einem radial inneren und/oder äußeren Endbereich (14, 10) auf seiner vom Lamellenträger (2) abgewandten Seite Abschnitte mit zum Rand hin abnehmender Dicke aufweist. Diese Abschnitte mit zum Rand hin abnehmender Dicke ziehen sich vorzugsweise um die Ecken (8) der Segmente (4) oder um das ganze Segment (4) herum. Die Abschnitte mit zum Rand hin abnehmender Dicke können, neben der Verringerung der Gefahr einer Beschädigung des Reibbelags, durch die Anströmung durch das Arbeitsfluid auch eine vom Lamellenträger (2) weg gerichtete axiale Strömungskomponente erzeugen oder zumindest unterstützen, was dazu dienen kann, die Kontaktkraft zwischen gegenüber liegenden Lamellen und damit das Schleppmoment zu verringern.

## Beschreibung

Die Erfindung betrifft eine Kupplungslamelle, insbesondere für eine nasslaufende Lamellenkupplung oder eine Überbrückungskupplung einer hydrodynamischen Kopplungseinrichtung, umfassend einen Lamellenträger mit einem auf wenigstens einer Seite darauf angeordneten Reibbelag, eine derartige Kupplungslamelle, bei der der Reibbelag mehrere Segmente mit dazwischen angeordneten Durchlässen für ein Arbeitsfluid umfasst, sowie eine Kopplungseinrichtung zur wahlweisen Herstellung einer Drehmomentübertragungsverbindung zwischen zwei um eine Achse drehbaren Elementen oder Baugruppen, insbesondere eine nasslaufende Lamellenkupplung oder Überbrückungskupplung einer hydrodynamischen Kopplungseinrichtung.

Insbesondere nasslaufende Kupplungen oder Drehmomentwandler unterliegen zum Teil sehr hohen Anforderungen hinsichtlich der auftretenden Verlustleistung. Um die so entstehende Wärme besser abführen zu können, werden Lamellen eingesetzt, die auf Grund ihrer Form einen zusätzlichen Volumenstrom des Arbeitsfluids erzeugen, wodurch dieses Arbeitsfluid mehrfach in der Kupplung oder im Drehmomentwandler umgewälzt wird und eine verbesserte Kühlleistung ermöglicht (so genannter HCC-Effekt, hydrodynamical cooled clutch). Dieser zusätzliche interne Volumenstrom kann zu einer starken Belastung der Reibbelagsegmente sowie zu höheren Schleppmomenten führen. Somit müssen entsprechende Kupplungslamellen entweder mit hochfesten Reibbelägen ausgestattet sein oder so ausgebildet sein, dass der selbst erzeugte Volumenstrom auf ein gewisses Maß begrenzt bleibt.

Eine Kupplungslamelle der eingangs genannten Art mit einem aus mehreren Segmenten bestehenden Reibbelag, die zum Einsatz in einer Überbrückungskupplung eines Drehmomentwandlers vorgesehen ist, ist in der US 6 675 942 B2 offenbart. Durchlässe für ein Arbeitsfluid zwischen Segmenten des Reibbelags werden dabei dadurch erzeugt, dass entweder Einzelsegmente auf einem Lamellenträger angeordnet werden oder dass in einem entsprechenden ringförmigen Reibbelag Vertiefungen in radialer Richtung angeordnet werden, die einen Durchstrom eines Arbeitsfluids ermöglichen. Dabei ist zur Verbesserung des Fluidflusses insbesondere im Hinblick auf eine Reduktion des Schleppmoments vorgesehen, die Kanten der Durchlässe in Umfangsrichtung zu verrunden oder abzuschrägen. Die oben dargelegte Problematik einer möglichen Beschädigung des Reibbelags durch die Anströmung mit dem Arbeitsfluid wird in der Druckschrift nicht angesprochen.

Aufgabe der vorliegenden Erfindung ist es, eine Kupplungslamelle der eingangs genannten Art vorzusehen, die weniger anfällig gegenüber Beschädigungen des Reibbelags durch einen erhöhten internen Volumenstrom ist und weiter ein reduziertes Schleppmoment ermöglicht.

Diese Aufgabe wird gelöst durch eine Kupplungslamelle, insbesondere für eine nasslaufende Lamellenkupplung oder eine Überbrückungskupplung einer hydrodynamischen Kopplungseinrichtung, umfassend einen Lamellenträger mit einem auf wenigstens einer Seite darauf angeordneten Reibbelag, der mehrere Segmente mit dazwischen angeordneten Durchlässen für ein Arbeitsfluid umfasst, bei der Ecken der Segmente abgeschrägt oder verrundet ausgebildet sind.

Bei der Unterteilung eines ringförmigen Reibbelags, der auf einen Lamellenträger angeordnet ist, in mehrere Segmente, zwischen denen Durchlässe gebildet werden, ergeben sich Ecken der Segmente zwangsläufig an den Enden der Durchlässe zu dem die Kupplungslamelle radial innen bzw. außen umgebenden Arbeitsraum. Auf Grund der möglichen Umströmung der Kupplungslamelle mit einem Arbeitsfluid, das zur Erzielung des oben erwähnten HCC-Effekts zwangsläufig an diesen Ecken in die Durchlässe eintreten oder aus diesen austreten muss, ergibt sich eine hohe Belastung dieser Ecken durch das anströmende Arbeitsfluid. Diese Belastung kann, insbesondere bei einem zur verbesserten Kühlung erwünschten erhöhten Volumenstrom, geeignet sein, den Reibbelag an den Ecken der Segmente zu beschädigen, d.h. insbesondere Material herauszureißen oder ggf. einzelne Lagen des Reibbelags abzulösen. Durch die vorgesehene Abschrägung oder Verrundung der Ecken der Segmente ergibt sich in diesen Bereichen ein günstigerer Strömungsverlauf, der weniger geeignet ist, den Reibbelag zu beschädigen. Sofern eine Abschrägung vorgesehen ist, kann diese auch in mehreren Stufen stattfinden und/oder an den Übergangsstellen wieder verrundet sein; im Falle einer Verrundung kann diese aus mehreren Abschnitten mit verschiedenen Krümmungsradien bestehen.

Die vorgenannte Aufgabe wird weiterhin gelöst durch eine Kupplungslamelle, insbesondere für eine nasslaufende Lamellenkupplung oder eine Überbrückungskupplung einer hydrodynamischen Kopplungseinrichtung, umfassend einen Lamellenträger mit einem wenigstens auf einer Seite darauf angeordneten Reibbelag, bei der der Reibbelag in einem radial inneren und/oder äußeren Endbereich auf seiner vom Lamellenträger abgewandten Seite Abschnitte mit zum Rand hin abnehmender Dicke aufweist. Dabei kann auch der gesamte innere und/oder äußere radiale Endbereich des Reibbelags eine zum Rand hin abnehmende Dicke aufweisen. Fernerhin kann der Reibbelag aus einem durchgehenden Ring bestehen oder mehrere Segmente mit dazwischen angeordneten Durchlässen für ein Arbeitsfluid umfassen.

Dadurch, dass zumindest in Abschnitten des Reibbelags die Dicke zum Rand des Reibbelags hin abnimmt, werden dessen Kanten in radialer Richtung gebrochen und ermöglichen somit wieder eine verbesserte Umströmung, die weniger geeignet ist, den Reibbelag an den Kanten zu beschädigen. Weiterhin bekommt durch diese vorgesehene Dickenabnahme die Strömung entlang des Umfangs des Reibbelags neben der radialen oder/und tangentialen Komponente auch eine axiale Komponente, also eine Komponente, die senkrecht vom Lamellenträger weg gerichtet ist. Diese Komponente führt zu einer Separierung gegenüberliegender Kupplungslamellen, wodurch die Kontaktkraft zwischen den Lamellen und somit das aus der coulombschen Reibung resultierende Schleppmoment reduziert werden.

Für den Reibbelag kann beispielsweise ein organisches Material wie etwa Papier, das ggf. in mehreren Lagen angeordnet sein kann, oder auch jedes andere geeignete Material verwendet werden.

Vorzugsweise werden alle Ausbildungsformen einer erfindungsgemäßen Kupplungslamelle, in denen der Reibbelag mehrere Segmente mit dazwischen angeordneten Durchlässen für ein Arbeitsfluid aufweist, so ausgebildet, dass Abschnitte mit zum Rand hin abnehmender Dicke im Seitenbereich der Segmente in Umfangsrichtung der Kuplungslamelle, also zu den Durchlässen hin, angeordnet sind. Dadurch wird auch in diesen Bereichen der Strömungsverlauf so modifiziert, dass die Gefahr einer Beschädigung des Reibbelags verringert wird, da auch hier die entsprechenden Kanten gebrochen werden.

Insbesondere kann es vorgesehen sein, eine oder mehrere Ecken der Segmente mit zum Rand hin abnehmender Dicke auszubilden, da wie bereits ausgeführt insbesondere an den Segmentecken hohe Strömungskräfte auftreten. Dementsprechend kann natürlich auch der gesamte Umfang eines Segments mit einer zum Rand hin abnehmenden Dicke ausgebildet sein.

Die Kupplungslamelle kann dabei so ausgebildet sein, dass die Dicke in den Abschnitten mit abnehmender Dicke wenigstens auf die 0,6-fache Reibbelagsdicke abnimmt. Generell ist eine möglichst große Dickenabnahme hinsichtlich der Verbesserung der Strömungsverhältnisse vorzuziehen, wobei allerdings fertigungstechnische und weitere Aspekte zu beachten sein können. Insbesondere kann hierbei der Zusammenhang zwischen der Dickenabnahme und der Wegstrecke, über die hinweg sich die Dickenabnahme vollzieht, von Bedeutung sein. Es kann beispielsweise vorgesehen sein, dass die Länge, über die sich die Dickenabnahme vollzieht, größer oder gleich der Differenz zwischen der Reibbelagsdicke und der minimalen Dicke des Reibbelags in den in der Dicke abnehmenden Abschnitten ist, und/oder dass die Länge, über die sich die Dickenabhnahme vollzieht, kleiner oder gleich dem vierfachen der Differenz zwischen der Reibbelagsdicke und der minimalen Dicke des Reibbelags in den in der Dicke abnehmenden Abschnitten ist. Wenn die Länge, über die sich die Dickenabnahme vollzieht, zu kurz gewählt ist, so dass der Kantenbereich immer noch relativ steil abfällt (d.h. nicht wesentlich von der Senkrechten relativ zum Lamellenträger abweicht), können sich die erwähnten vorteilhaften Strömungsverhältnisse unter Umständen nicht in dem erwünschten Maß einstellen und es kann bei der Herstellung der Dickenabnahme, insbesondere wenn diese durch Verpressen geschieht, der Reibbelag schon bei der Herstellung beschädigt werden. Wird die Länge zu groß gewählt, kann dies möglicherweise ebenfalls ungünstige Auswirkungen auf die Strömungsverhältnisse haben und kann zudem die nutzbare Oberfläche des Reibbelags in unerwünschtem Maße verkleinern.

In jedem Fall kann die vorgesehene Dickenabnahme im Wesentlichen in Form einer Abschrägung oder in Form einer Verrundung ausgebildet sein. Bei einer abgeschrägten Ausbildung kann es dennoch vorgesehen sein, eventuell einzelne Bereiche, insbesondere die Übergänge zu den unveränderten Bereichen des Reibbelags, zu verrunden oder eventuell in mehreren Stufen abzuschrägen. Auch eine Verrundung, in der mehrere verschiedene Krümmungsradien kombiniert werden, ist denkbar.

Die Dickenabnahme des Reibbelags kann insbesondere durch eine Verformung des Reibbelags bewirkt werden. Dies kann beispielsweise durch eine Anprägung, insbesondere durch ein Verpressen geschehen. Dadurch wird der Reibbelag in seinem Kantenbereich komprimiert und somit verdichtet und gewinnt zusätzliche Festigkeit, um der Anströmung durch das Arbeitsfluid besser widerstehen zu können. Alternativ kann die Dickenabnahme natürlich auch materialabtragend bewirkt werden.

Weiterhin wird die eingangs gestellte Aufgabe gelöst durch eine Kopplungseinrichtung zur wahlweisen Herstellung einer Drehmomentübertragungsverbindung zwischen zwei um eine Achse drehbaren Elementen oder Baugruppen, insbesondere eine nasslaufende Lamellenkupplung oder eine Überbrückungslupplung einer hydrodynamischen Kopplungseinrichtung, die wenigstens eine entsprechend der Erfindung ausgebildete Kupplungslamelle umfasst. Die Eigenschaften und Vorteile ergeben sich aus dem oben Dargelegten und umfassen insbesondere eine geringere Verschleissneigung der Kupplungslamelle und somit einen geringeren Wartungsbedarf der Kopplungseinrichtung, sowie geringere Verluste in deren Betrieb aufgrund eines reduzierten Schleppmoments.

Insbesondere zum Einsatz in einer derartigen Kopplungseinrichtung kann es vorteilhaft sein, die Kupplungslamelle so auszubilden, dass auf beiden Seiten des Lamellenträgers ein Reibbelag angeordnet ist, der entsprechend der Erfindung ausgestattet ist.

Die Erfindung wird im Folgenden anhand von Figuren näher erläutert. Dabei zeigen:
- Fig. 1: eine Aufsicht einer erfindungsgemäßen Kupplungslamelle, und
- Fig. 2: eine Schnittansicht des Randbereichs eines Reibbelagsegments der Kupplungslamelle aus Fig. 1.

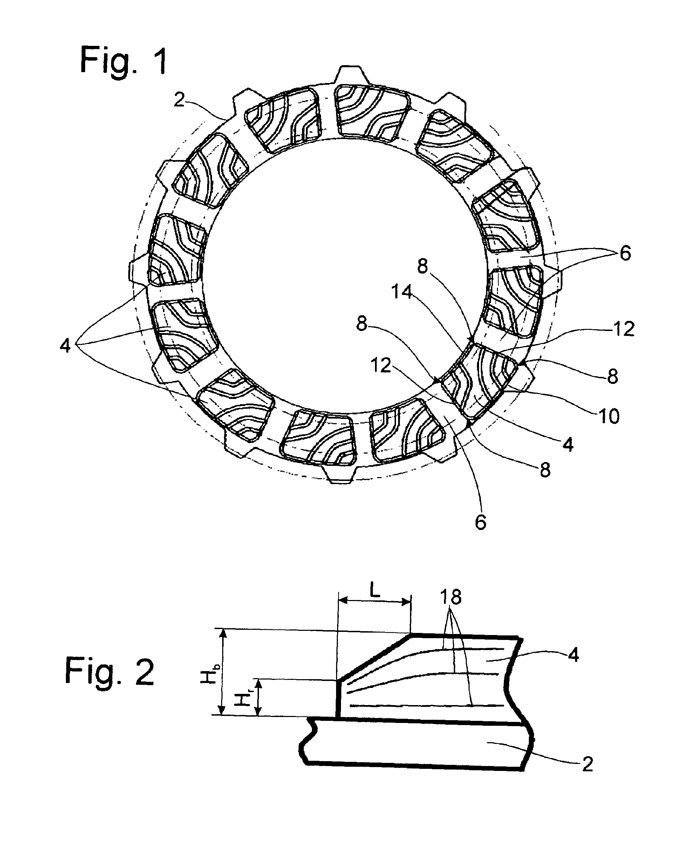

Fig. 1 zeigt eine Aufsicht einer Kupplungslamelle, umfassend einen im Wesentlichen ringförmigen Lamellenträger 2, auf dem eine Mehrzahl von Reibbelagsegmenten 4 angeordnet ist. Der für die Segmente 4 verwendete Reibbelag kann beispielsweise aus Papier, das ggf. in mehreren Lagen angeordnet sein kann, bestehen. Natürlich kann für den Reibbelag auch jedes andere geeignete Material verwendet werden. Zwischen den einzelnen Segmenten 4 befinden sich Durchlässe 6, die das Durchströmen eines Arbeitsfluids der Kupplung, in der die Kupplungslamelle zum Einsatz kommt, ermöglichen. Es kann vorgesehen sein, auch die in Fig. 1 nicht sichtbare Rückseite des Lamellenträgers 2 mit einer Reibbelaganordnung zu versehen, die im Wesentlichen der dargestellten entspricht. Eine derartige Kupplungslamelle kann insbesondere in einer nasslaufenden Lamellenkupplung oder in einer Überbrückungskupplung einer hydrodynamischen Kopplungseinrichtung, wie etwa in einem Drehmomentwandler oder einer Fluidkupplung, eingesetzt werden.

Wenn die Kupplungslamelle vom Arbeitsfluid der Kupplung, in der die Kupplungslamelle eingesetzt wird, umströmt wird, treten insbesondere an den Ecken der Segmente 4 sowie an den Kanten 10, 12 und 14 der Segmente durch die Anströmung mit dem Arbeitsfluid Kräfte auf, die geeignet sein können, den Reibbelag an diesen Stellen aufzureißen. Insbesondere bei der Verwendung von Lamellen mit HCC-Effekt, die einen hohen internen Volumenstrom erzeugen, ergibt sich eine hohe Belastung des Reibbelags. Diese Belastung kann dadurch reduziert werden, dass Ecken 8 der Segmente 4 verrundet oder abgeschrägt werden, wodurch diese Bereiche gegenüber der umströmenden Flüssigkeit weniger exponiert werden und weniger Angriffsmöglichkeiten bieten.

Weiterhin nimmt an den vom Lamellenträger abgewandten Kanten 10, 12 und 14 der Segmente 4 die Dicke des Reibbelags zum Rand des Segments 4 hin ab, um auch hier weniger Angriffsfläche für die Anströmung durch das Arbeitsfluid zu bieten. In der dargestellten Ausbildungsform ist diese Dickenabnahme umlaufend um ein komplettes Segment 4 ausgebildet und erfasst somit sowohl die Kanten 12 im Seitenbereich der Segmente zu den Durchlässen 6 hin als auch die Kante 10 im radial äußeren und die Kante 14 im radial inneren Endbereich, wobei auch die jeweils die Kanten verbindenden, hier abgerundeten, Ecken 8 des Segments 4 eine derartige Dickenabnahme zum Rand hin aufweisen.

Alternativ könnte auch vorgesehen werden, nur die Kanten 10 bzw. 14 in einem oder beiden der radialen Endbereiche mit einer derartigen Dickenabnahme zu versehen, insbesondere dann, wenn der Reibbelag nicht in Form von Segmenten 4, sondern als durchgehender Ring ausgebildet ist.

Weiterhin kann die Dickenabnahme auch nur im Bereich der Ecken 8 der Segmente 4 vorgesehen sein, wobei sie sich dann nur über eine begrenzte Strecke entlang der jeweiligen Kanten 12 und 10 bzw. 14 erstreckt.

Die Dickenabnahme kann in jedem Fall beispielsweise in Form einer Abschrägung, wie in Fig. 2 gezeigt, oder in Form einer Verrundung vorgesehen sein.

Neben dem Schutz des Reibbelags vor Aufreißen hat insbesondere die Dickenabnahme der Segmente 4 an den Kanten 10 und 14 der radial äußeren oder inneren Endbereiche die weitere Funktion der Reduzierung der Schleppmomente. Insbesondere aufgrund des oben erwähnten inneren Volumenstroms wird durch coulombsche Reibung ein erhöhtes Schleppmoment erzeugt, welches zu unerwünschten Verlusten führt. Durch die Dickenabnahme an den Kanten 10 und 14 der radialen Außen- bzw. Innenendbereiche bekommt die Strömung neben der radialen oder/und tangentialen Komponente eine axiale, also vom Lamellenträger 2 weg gerichtete Komponente, die zu einer Separierung gegenüberliegender Kupplungslamellen führt. Insbesondere bei single side-Lamellen kann so die Kontaktkraft zwischen den Lamellen und damit auch das Schleppmoment reduziert werden.

Fig. 2 zeigt einen Ausschnitt aus einem Randbereich eines Segments 4 des Reibbelags, welches mit einer Dickenabnahme in Form einer Abschrägung versehen ist. Der dargestellte Ausschnitt kann in dieser Form sowohl einer Kante 10 oder 14 eines radial äußeren oder inneren Endbereichs oder auch einer Kante 12 eines einem Durchlass 6 zugewandten, also in Umfangsrichtung der Kupplungslamelle orientierten, Seitenbereichs eines Segments 4 entnommen sein. Die Dickenabnahme zum Rand hin ist hier in Form einer Abschrägung mit definierten Knicken am Übergang zum unveränderten Teil des Reibbelags und zum axial ausgerichteten Rand ausgebildet. Diese Übergänge können allerdings auch beispielsweise verrundet ausgeführt sein. Weiterhin kann die Dickenabnahme auch alternativ komplett in Form einer Verrundung oder als Kombination aus Verrundung und Abschrägung ausgeführt sein.

Im hier gezeigten Beispiel wird die Abschrägung vorzugsweise durch eine Verformung des Reibbelags, d.h. eine Anprägung insbesondere durch Verpressen, bewirkt. Dabei verändern die Fasern 18 des Reibbelags, der beispielsweise aus Papier besteht, ihre Orientierung, so dass der Reibbelag im Bereich mit abnehmender Dicke komprimiert wird und somit dort zusätzliche Festigkeit gewinnt. Alternativ kann natürlich auch eine Material abnehmende Formänderung vorgesehen sein.

Durch die vorgesehene Dickenabnahme haben die Strömungskräfte weniger Angriffsfläche, um auf den Reibbelag einwirken zu können, um diesen möglicherweise aufzureißen, und erzeugen zudem im abgeschrägten Teil des Reibbelags eine Kraft in Richtung auf den Lamellenträger 2, die der Kraft, die den Belag aufreißen will, entgegenwirkt.

Das Verhältnis zwischen der Höhe Hᵣ, die der minimalen Dicke des Reibbelags am Rand entspricht, und der Reibbelagsdicke H_{b} ist dabei vorzugsweise kleiner als 0,6. Grundsätzlich gilt, dass hinsichtlich der Widerstandsfähigkeit des Randbereichs des Reibbelags kleinere Werte von Hᵣ günstiger sind. Die Länge L, über die hinweg sich die Dickenabnahme des Reibbelags vollzieht, sollte vorzugsweise größer oder gleich der Differenz zwischen der Reibbelagsdicke H_{b} und der minimalen Dicke Hᵣ sein, um einen günstigen Strömungsverlauf zu erzielen und um eine zu starke Belastung des Belags beim Anprägen, die wiederum zu einer Zerstörung führen könnte, zu verhindern. Allerdings sollte die Länge L auch nicht zu groß gewählt werden, um die nutzbare Oberfläche der Segmente 4 nicht zu sehr zu verkleinern. So kann die Länge L beispielsweise kleiner oder gleich dem vierfachen der Differenz zwischen der Reibbelagsdicke H_{b} und der Dicke Hᵣ sein.

## Patentansprüche

1. Kupplungslamelle, insbesondere für eine nasslaufende Lamellenkupplung oder eine Überbrückungskupplung einer hydrodynamischen Kopplungseinrichtung, umfassend einen Lamellenträger (2) mit einem auf wenigstens einer Seite darauf angeordneten Reibbelag, der mehrere Segmente (4) mit dazwischen angeordneten Durchlässen (6) für ein Arbeitsfluid umfasst,
**dadurch gekennzeichnet, dass** Ecken (8) der Segmente (4) abgeschrägt oder verrundet ausgebildet sind.

2. Kupplungslamelle, insbesondere für eine nasslaufende Lamellenkupplung oder eine Überbrückungskupplung einer hydrodynamischen Kopplungseinrichtung, umfassend einen Lamellenträger (2) mit einem auf wenigstens einer Seite darauf angeordneten Reibbelag,
**dadurch gekennzeichnet, dass** der Reibbelag in einem radial inneren und/oder äußeren Endbereich (14, 10) auf seiner vom Lamellenträger (2) abgewandten Seite Abschnitte mit zum Rand hin abnehmender Dicke aufweist.

3. Kupplungslamelle nach Anspruch 2,
**dadurch gekennzeichnet, dass** der gesamte radial innere und/oder äußere Endbereich (14, 10) des Reibbelages eine zum Rand hin abnehmende Dicke aufweist.

4. Kupplungslamelle nach Anspruch 2 oder 3, wobei der Reibbelag mehrere Segmente (4) mit dazwischen angeordneten Durchlässen für ein Arbeitsfluid umfasst.

5. Kupplungslamelle nach Anspruch 1 oder 4,
**dadurch gekennzeichnet, dass** Abschnitte mit zum Rand hin abnehmender Dicke im Seitenbereich (12) der Segmente zu den Durchlässen (6) hin angeordnet sind.

6. Kupplungslamelle nach Anspruch 5,
**dadurch gekennzeichnet, dass** eine Ecke (8) der Segmente (4) mit zum Rand hin abnehmender Dicke ausgebildet ist.

7. Kupplungslamelle nach Anspruch 6,
**dadurch gekennzeichnet, dass** der gesamte Umfang eines Segments (4) eine zum Rand hin abnehmende Dicke aufweist.

8. Kupplungslamelle nach einem der Ansprüche 2 bis 7,
**dadurch gekennzeichnet, dass** die Dicke in den Abschnitten mit abnehmender Dicke wenigstens auf die 0,6-fache Reibbelagsdicke (H_{b}) abnimmt.

9. Kupplungslamelle nach einem der Ansprüche 2 bis 8,
**dadurch gekennzeichnet, dass** die Länge (L), über die sich die Dickenabnahme vollzieht, größer oder gleich der Differenz zwischen der Reibbelagsdicke (H_{b}) und der minimalen Dicke (Hᵣ) des Reibbelages in den in der Dicke abnehmenden Abschnitten ist.

10. Kupplungslamelle nach einem der Ansprüche 2 bis 9,
**dadurch gekennzeichnet, dass** die Länge (L), über die sich die Dickenabnahme vollzieht, kleiner oder gleich dem Vierfachen der Differenz zwischen der Reibbelagsdicke (H_{b}) und der minimalen Dicke (Hᵣ) des Reibbelages in den in der Dicke abnehmenden Abschnitten ist.

11. Kupplungslamelle nach einem der Ansprüche 2 bis 10,
**dadurch gekennzeichnet, dass** die Dickenabnahme im Wesentlichen in Form einer Abschrägung ausgebildet ist.

12. Kupplungslamelle nach einem der Ansprüche 2 bis 10,
**dadurch gekennzeichnet, dass** die Dickenabnahme im Wesentlichen in Form einer Verrundung ausgebildet ist.

13. Kupplungslamelle nach einem der Ansprüche 2 bis 12,
**dadurch gekennzeichnet, dass** die Dickenabnahme durch eine Verformung des Reibbelages bewirkt wird.

14. Kopplungseinrichtung zur wahlweisen Herstellung einer Drehmomentübertragungsverbindung zwischen zwei um eine Achse drehbaren Elementen oder Baugruppen, insbesondere nasslaufende Lamellenkupplung oder Überbrückungskupplung einer hydrodynamischen Kopplungseinrichtung, umfassend wenigstens eine Kupplungslamelle nach einem der vorhergehenden Ansprüche.
